# EUROPEAN PATENT SPECIFICATION

(11) **EP 3 236 764 B1**
(45) Date of publication and mention of the grant of the patent: **24.07.2019**
(21) Application number: 15820831.4
(22) Date of filing: 17.12.2015
(51) Int. Cl.: A23C 11/04, A23C 11/08, A23F 5/14, A23L 27/00, A23L 2/56, A23L 27/10, A23L 27/14, A23L 23/00, A23L 23/10

(54) **PROCESS FOR THE PREPARATION OF SPICE COMPOSITIONS**
VERFAHREN ZUR HERSTELLUNG VON GEWÜRZZUSAMMENSETZUNGEN
PROCÉDÉ DE PRÉPARATION DE COMPOSITIONS D'ÉPICES

(30) Priority: 22.12.2014 EP 14199887
(43) Date of publication of application: 01.11.2017
(73) Proprietor: Société des Produits Nestlé S.A., 1800 Vevey (CH)
(72) Inventor: REH, Christoph, 1066 Epalinges (CH); POUZOT, Matthieu, 1010 Lausanne (CH); NIEDERREITER, Gerhard, 1073 Savigny (CH); FRIES, Lennart, 1006 Lausanne (CH); GEHIN-DELVAL, Cécile, 25370 Les Hôpitaux Neufs (FR); LESER, Martin, 1053 Bretigny-sur-Morrens (CH)
(74) Representative: Lomholt, Stig Bredsted
(86) International application number: PCT/EP2015/080317
(87) International publication number: WO 2016/102325

(56) References cited:
- EP-A1- 0 512 468
- EP-A2- 0 522 704
- WO-A1-2015/000885
- JP-A- 2008 167 723
- Anonymous: "Alpine AHM | Hosokawa Micron Powder Systems", , 12 June 2015 (2015-06-12), XP055195442, Retrieved from the Internet: URL:http://hmicronpowder.com/products/alpi ne-ahm [retrieved on 2015-06-12]

## Description

### Technical field of the invention

The present invention relates to processes for providing spice compositions. In particular the present invention relates to beverages and culinary products containing micronized spice particles.

The present invention relates to the use of spice in creamers, beverage powders, ready-to-drink liquid beverage preparations, or culinary application.

### Background of the invention

Spice compositions are widely used as flavor balancing ingredient for example in beverages (spice such as vanilla, cardamom, cinnamon, ginger) or in culinary (spice such as curry, mustard, nutmeg, chilli, pepper, cumin, saffran). In the context of this patent we also consider ingredients as spices which have achieved their flavor profile due to an roasting process of roots like chiccoree, cereals like wheat, or kernels like date kernels, Their compositional bases can be also used as cream soups or creamy sauces. In all described applications a certain fat content delivers a smooth, round taste and offers indulgence through mouthcoating sensations that are commonly referred to as creaminess. These sensations are normally supported by an added aroma and/or flavor compound which is normally produced through chemical synthesis or extraction of natural compounds.

Spices are of hydrophobic in nature and often have issues of lumping, dissolution when reconstituted in aqueous liquids.

Natural extracts or flavor mixtures gained through chemical analysis are used to aromatize beverage powders, liquid or powdered creamers, creamy sauces, creamy soups or RTD beverages. Many natural occurring sources of aroma and/or flavor suffer from poor water solubility and do not deliver the whole aroma and flavor potential. Therefore natural sources are almost not possible to be used in these applications due to bad performance in the described product groups.

Spice powder tends to get stale and loses taste intensity over time. This is due to the high specific surface of the powder the aroma is very sensitive to oxidation and volatiles are lost very quickly. Fresh ground spice taste cannot be maintained. The spice powder is added into beverage powders by dry mixing. Once mixed within the beverage powder, the spice is difficult to reconstitute due to its hydrophobic properties.

JP2008167723 relates to a method for producing liquid seasoning containing the sesame, an aqueous phase and an oil phase includes mixing the sesame with other raw materials after pulverizing the sesame in the oil phase. EP0522704 relates to food modifier and process for making same.

Thus the present invention addresses these issues by micronizing such substances in oil and dispersing this composition into an aqueous phase and further provides a stable dispersion and better reconstitution. Intense mixing, shearing and milling of fibrous particles in oil create oil-covered micro particles that act like oil droplets when dispersed in water.

### Summary of the invention

One aspect of the invention relates to a process for providing a spice composition, wherein the spice is not coffee, the process comprising a first mixing step to obtain a first composition and a second mixing step to obtain a second composition;
wherein
a) mixing in a first mixing step an oil component with spice and grinding the spice in oil thereby providing a first composition comprising micronized spice as claimed incorporated in the oil component;
b) providing a aqueous component comprising milk proteins , plant proteins or combinations thereof thereby providing a second composition,
c) mixing in a second mixing step the first composition with the second composition and
d) homogenising the composition thereby providing an oil-in-water emulsion.

None of the prior art provide a solution to increase the stability of the compositions in particular reduce sedimentation and enhance other desired properties such as aroma release.

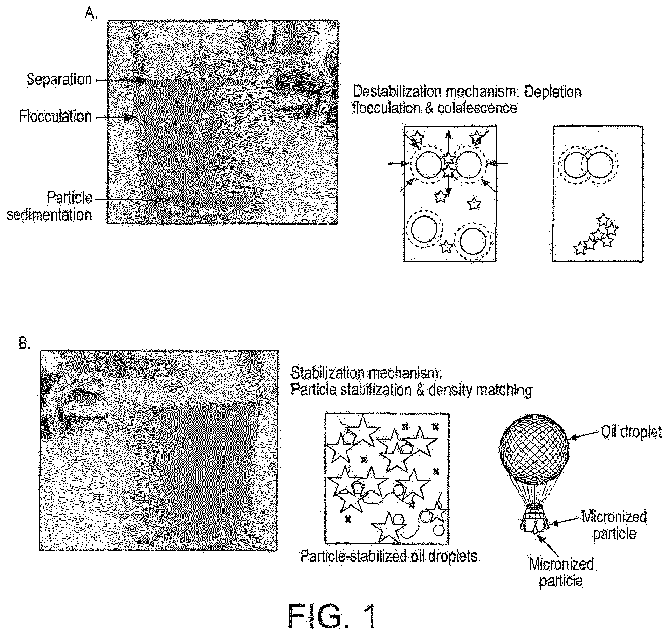

The desired stabilization effect achieved by the present invention is demonstrated in figure 1 wherein the micronized particle and the oil droplet interact in a manner which is termed as "balloon effect"which shows a consistent uniform product, achieved by encapsulating the plant seed particles in oil and introducing this to the creamer component as described below.

The rounded particles represent the oil droplets in the emulsion. If the emulsion is not stable, the droplets merge together.

The present invention will now be described in more detail in the following.

### Brief description of Figures

Figure 1 shows a diagrammatic representation of the problem with methods illustrated in prior art such as dry mix grinding (A). This sample shows separation flocculation and sedimentation. While the sample of the present invention (B) shows a consistent uniform product which is achieved by encapsulating the spice particles in oil and introducing this to the beverage or culinary product component as described below. The rounded particles represent oil droplets in emulsion. If the emulsion is not stable droplets merge together.
Figure 2 shows particle size distributions of (A) commercial vanilla powder with d90 of 670 µm, (B) vanilla particles micronized in oil with d90 of 55 µm, (C) dry milled vanilla powder with d90 of 220 µm.
Figure 3: Cup with the immersed plate for measuring mass of sediments (Fig. 3A), plate with sediments after 5 minutes time for the reference beverage containing dry milled vanilla particles (Fig. 3B) and beverage made with vanilla particles micronized in oil (Fig. 3C). Mass of sediments versus time for both the reference beverage and the beverage containing vanilla micronized in oil (Fig. 3D).

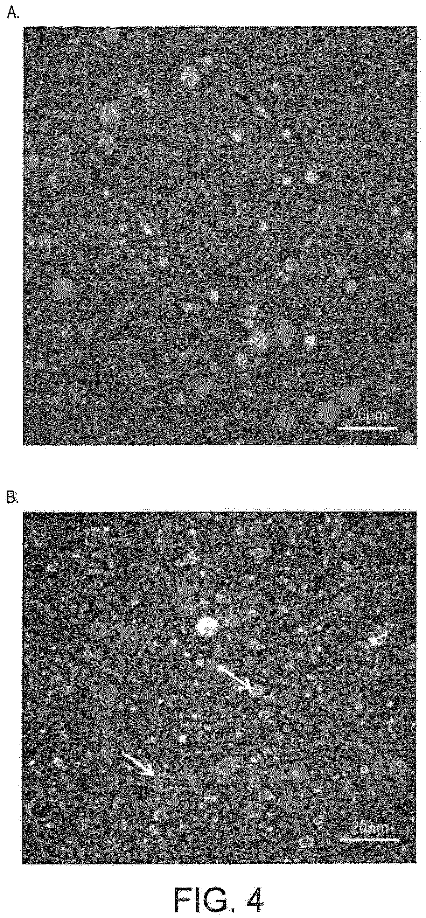

Figure 4: Confocal microscope images of reconstituted creamer samples showing oil droplets emulsified in water. In a reference sample (Fig. 4 A Reconstituted creamer made by adding dry milled vanilla particles. No interfacial absorption of particles is observed) low levels of surface stabilization are found compared to the sample containing vanilla particles micronized in oil (Fig. 4 B). White arrows point at protein-rich particles absorbed at the oil-water interface, which stablize the emulsion. Furthermore, vanilla particles are found inside the oil droplets, therefore protected from oxidation by the oil droplets.
Figure 5 shows particle size distributions of (A) commercial cinnamon powder with d90 of 259 µm, (B) cinnamon particles micronized in oil with d90 of 70 µm, (C) dry milled cinnamon powder with d90 of 120 µm.
Figure 6 shows the result of a dissolution kinetics assessment as described in Example 3. It can be seen that the product according to the present invention (cinnamon micronized in oil) dissolves faster than a reference sample at equal fat and cinnamon content (dry mixed).
Figure 7 shows particle size distributions of commercial curry powder (with d90 of 240 µm) and curry particles micronized in oil (with d90 of 134 µm).

### Detailed description of the invention

As mentioned above, the present invention relates to a process for providing spice compositions with improved solubility and having an enhanced taste and/or aroma profile. Thus, an aspect of the present invention relates to a process for providing a spice composition, wherein the spice is not coffee, the process comprising
a) mixing in a first mixing step an oil component with spice and grinding the spice in oil thereby providing a first composition comprising micronized spice as claimed incorporated in the oil component;
b) providing an aqueous component comprising milk proteins, dairy or plant proteins or combinations thereof thereby providing a second composition,
c) mixing in a second mixing step the first composition with the second composition and
d) homogenising the composition thereby providing an oil-in-water emulsion.

In one embodiment the process comprises further steps of: adding a bulking and/or sweetener agent(s) to the oil-in-water emulsion; and pasteurizing or commercially sterilizing the oil-in-water emulsion. The bulking agent comprises maltodextrin and the sweetener agent comprises sugar, and /or combination of carbohydrates.

The order of mixing the different components may vary. Preferably, the oil phase and an aqueous phase are prepared separately. Emulsifiers are usually mixed into the oil but may also be added to the aqueous phase. Protein and other milk proteins such as creamer components are dissolved in the aqueous phase. The two phases are then mixed and homogenized to produce an emulsion, which can be used in liquid form or dried. The spice particles may be incorporated into (and milled in) only a part of the oil and additional oil may be added afterwards. Thus, in an embodiment one or more further oil components are added after step d), such as before pasteurization and/or drying.

The spice particles are micronized after addition to the oil (e.g. by milling).

The term "spice" relates to a dried seed, fruit, bark, root or vegetable substance primarily used for flavouring, coloring or preserving food. For purpose of this invention, coffee is not considered as a spice and is disclaimed.

Examples of suitables spices are:
Ajwain, carom seeds (*Trachyspermum ammi*), Akudjura (*Solanum centrale*), Alexanders (*bullaSmyrnium olusatrum*), Alkanet (*Alkanna tinctoria*)*,* for red color, Alligator pepper, mbongo spice (mbongochobi), hepper pepper (*Aframomum danielli, A. citratum, A. exscapum*), Allspice (*Pimenta dioica*)*,* Angelica (*Angelica archangelica*)*,* Anise (*Pimpinella anisum*)*,* Anise Hyssop *(Agastache foeniculum*)*,* Aniseed myrtle (*Syzygium anisatum*)*,* Annatto (*Bixa orellana*), Apple mint (*Mentha suaveolens, Mentha* × *rotundifolia* and *Mentha* × *villosa*)*,* Artemisia (*Artemisia spp.*), Asafoetida (*Ferula assafoetida*)*,* Asarabacca (*Asarum europaeum*), Avens (*Geum urbanum*), Avocado leaf (*Peresea americana*), Barberry (*Berberis vulgaris* and other *Berberis spp.*), Basil, sweet (*Ocimum basilicum*)*,* Basil, lemon (*Ocimum* × *citriodorum*)*,* Basil, Thai (O. *basilicum* var. *thyrsiflora*)*,* Basil, Holy (*Ocimum tenuiflorum*), Bay leaf (*Laurus nobilis*)*, Bay leaf, Indian, tejpat, malabathrum,* Bee balm (*Monarda didyma*)*,* Boldo (*Peumus boldus*), Borage (*Borago officinalis*), Black cardamom (*Amomum subulatum, Amomum costatum*), Black mustard (*Brassica nigra*)*,* Blue fenugreek, blue melilot (*Trigonella caerulea*)*,* Brown mustard (*Brassica juncea*), Caraway (*Carum carvi*)*,* Cardamom (*Elettaria cardamomum*)*,* Catnip (*Nepeta cataria*)*,* Cassia (*Cinnamomum aromaticum*)*,* Cayenne pepper (*Capsicum annuum*), Celery leaf (*Apiumi graveolens*), Celery seed (*Apiumi graveolens*), Chervil (*Anthriscus cerefolium*), Chicory (*Cichorium intybus*)*,* Chili pepper (*Capsicum spp.*), Chives (*Allium schoenoprasum*)*,* Cicely, sweet cicely (*Myrrhis odorata*)*,* Cilantro, coriander greens, coriander herb (*Coriandrum sativum*), Cinnamon, Indonesian (*Cinnamomum burmannii, Cassia vera*), Cinnamon, Saigon or Vietnamese (*Cinnamomum loureiroi*)*,* Cinnamon, true or Ceylon (*Cinnamomum verum, C. zeylanicum*), Cinnamon, white (*Canella winterana*)*,* Cinnamon myrtle (*Backhousia myrtifolia*)*,* Clary, Clary sage (*Salvia sclarea*), Clove (*Syzygium aromaticum*)*,* Coriander seed (*Coriandrum sativum*), Costmary (*Tanacetum balsamita*)*,* Cuban oregano (*Plectranthus amboinicus*)*,* Cubeb pepper (*Piper cubeba*)*,* Cudweed (*Gnaphalium* spp.), Culantro, culangot, long coriander (*Eryngium foetidum*), Cumin (*Cuminum cyminum*)*,* Curry leaf (*Murraya koenigii*)*,* Curry plant (*Helichrysum_italicum*)*,* Dill seed (*Anethum graveolens*), Dill herb or weed (*Anethum graveolens*), Elderflower (*Sambucus spp*.), Epazote (*Dysphania ambrosioides*)*,* Fennel (*Foeniculum vulgare*), Fenugreek (*Trigonella foenum-graecum*)*,* Filé powder, gumbo filé (*Sassafras albidum*)*,* Fingerroot, *krachai, temu kuntji* (*Boesenbergia rotunda*)*,* Galangal, greater (*Alpinia galanga*), Galangal, lesser (*Alpinia officinarum*)*,* Galingale (*Cyperus spp.*), Garlic chives (*Allium tuberosum*), Ginger (*Zingiber officinale*), Ginger, torch, *bunga siantan* (*Etlingera elatior*)*, Golpar,* Persian hogweed (*Heracleum persicum*)*,* Grains of paradise (*Aframomum melegueta*), Grains of Selim, Kani pepper (*Xylopia aethiopica*)*,* Horseradish (*Armoracia rusticana*)*, Houttuynia cordata,* Huacatay, Mexican marigold, mint marigold (Tagetes minuta), Hyssop (Hyssopus officinalis), Indonesian bay leaf, daun salam (Syzygium polyanthum), Jasmine flowers (Jasminum spp.), Jimbu (Allium hypsistum), Juniper berry (*Juniperus communis*), Kaffir lime leaves, Makrud lime leaves (*Citrus hystrix*)*,* Kala zeera (or kala jira), black cumin (*Bunium persicum*)*,* Kawakawa seeds (*Macropiper excelsum*), *Kencur, galangal, kentjur* (*Kaempferia galanga*), *Keluak, kluwak, kepayang* (*Pangium edule*), *Kinh gioi, Vietnamese balm* (*Elsholtzia ciliata*)*, Kokam* seed (*Garcinia indica), Korarima,* Ethiopian cardamom, false cardamom (*Aframomum corrorima*)*, Koseret* leaves (*Lippia adoensis*)*,* Lavender (*Lavandula spp*.), Lemon balm (*Melissa officinalis*), Lemongrass (Cymbopogon citratus, C. flexuosus, and other Cymbopogon spp.), Lemon ironbark (Eucalyptus staigeriana), Lemon myrtle (Backhousia citriodora), Lemon verbena (Lippia citriodora), Leptotes bicolor, Lesser calamint (Calamintha nepeta), nipitella, nepitella, Licorice, liquorice (Glycyrrhiza glabra), Lime flower, linden flower (Tilia spp.), Lovage (Levisticum officinale), Mace (Myristica fragrans), Mahlab, St. Lucie cherry (Prunus mahaleb), Marjoram (Origanum majorana), Mastic (Pistacia lentiscus), Mint (Mentha spp.), Mountain horopito (Pseudowintera colorata) 'Pepper-plant', Musk mallow, abelmosk (Abelmoschus moschatus), Mustard, black, mustard plant, mustard seed (Brassica nigra), Mustard, brown, mustard plant, mustard seed (Brassica juncea), Mustard, white, mustard plant, mustard seed (Sinapis alba), Nigella, kalonji, black caraway, black onion seed (Nigella sativa), Njangsa, djansang (Ricinodendron heudelotii), Nutmeg (Myristica fragrans), Olida (Eucalyptus olida), Oregano (Origanum vulgare, O. heracleoticum, and other species) Orris root (Iris germanica, I. florentina, I. pallida), Pandan
   flower, kewra (Pandanus odoratissimus), Pandan leaf, screwpine (Pandanus amaryllifolius) Paprika (Capsicum annuum), Paracress (Spilanthes acmella, Soleracea) (Brazil) Parsley (Petroselinum crispum), Pepper: black, white, and green (Piper nigrum) Pepper, Dorrigo, Pepper, long (Piper longum) Pepper, mountain, Cornish pepper leaf (Tasmannia lanceolata), Peppermint (Mentha piperata), Peppermint gum leaf (Eucalyptus dives), Perilla, shiso (Perilla spp.), Peruvian pepper (Schinus molle), Brazilian pepper or Pink pepper (Schinus terebinthifolius), Quassia (Quassia amara), Rice paddy herb (Limnophila aromatica), Rosemary (Rosmarinus officinalis), Rue (Ruta graveolens) Safflower (Carthamus tinctorius), Saffron (Crocus sativus), Sage (Salvia officinalis) Saigon cinnamon (Cinnamomum loureiroi), Salad burnet (Sanguisorba minor) Salep (Orchis mascula),Sassafras (Sassafras albidum), Savory, summer (Satureja hortensis), Savory, winter (Satureja montana),
Silphium, silphion, laser, laserpicium, lasarpicium ,Shiso (Perilla frutescens) Sorrel (Rumex acetosa), Sorrel, sheep (Rumex acetosella), Spearmint (Mentha spicata) Spikenard (Nardostachys grandiflora or N. jatamansi), Star anise (Illicium verum) Sumac (Rhus coriaria), Sweet woodruff (Galium odoratum), Szechuan pepper, Sichuan pepper (Zanthoxylum piperitum), Tarragon (Artemisia dracunculus), Thyme (Thymus vulgaris), Thyme, lemon (Thymus × citriodorus),Turmeric (Curcuma longa),Vanilla (Vanilla planifolia),Vietnamese cinnamon (Cinnamomum loureiroi) Vietnamese coriander (Persicaria odorata), Voatsiperifery (Piper borbonense), Wasabi (Wasabia japonica), Water-pepper, smartweed (Polygonum hydropiper) Watercress (Rorippa nasturtium-aquatica), Wattleseed (from about 120 spp. of Australian Acacia), White mustard (Sinapis alba), Wild thyme (Thymus serpyllum) Willow herb (Epilobium parviflorum), Wintergreen (Gaultheria procumbens) Wood avens, herb bennet (Geum urbanum), Woodruff (Galium odoratum) Wormwood, absinthe (Artemisia absinthium,Yellow mustard (Brassica hirta = Sinapis alba), Za'atar (herbs from the genera Origanum, Calamintha, Thymus, and Satureja) Zedoary (Curcuma zedoaria).

The advantages of the present invention over existing solutions include:
- Significantly improved aroma and/flavor delivery through natural sources
- Only natural ingredients need to be added to the products.
- More intensive use of natural raw materials (side streams). The invention supports the use of natural less processed food ingredients at reduced cost and added consumer value.
- Stable suspension of fibrous parts of the natural ingredients without sedimentation.
- Aroma and flavor components are known to support creaminess and mouthfeel and are therefore supporting consumer preference.

In one embodiment the aqueous component is a diary component and can include one or more dairy ingredients or dairy substitute ingredients. For example, the dairy ingredients can be milk, milk fat, milk powder, skim milk, milk proteins and combinations thereof. Examples of suitable dairy proteins are casein, caseinate, casein hydrolysate, whey, whey hydrolysate, whey concentrate, whey isolate, milk protein concentrate, milk protein isolate, and combinations thereof. Furthermore, the dairy protein may be, for example, sweet whey, acid whey, α-lactalbumin, β-lactoglobulin, bovine serum albumin, acid casein, caseinates, α-casein, β-casein and/or γ-casein. Suitable dairy substitute ingredients include soy proteins, rice proteins and combinations thereof, for example. In an embodiment, milk fat is present in the beverage in an amount from about 0% to about 1.5% of the beverage. In an embodiment, the milk fat is the only fat source in the beverage. For example, the beverage can have no added oil.

Emulsifiers are preferably added to the first composition in step a), but it may also be added in other steps. Thus, in an embodiment the one or more emulsifiers are added
- to the first composition in step a); and/or
- to the aqueous component in step b); and/or
- during the mixing step c); and/or
- during the homogenisation step d).

The spice composition of the invention may comprise low molecular weight emulsifiers. By a low molecular weight emulsifier is meant an emulsifier with a molecular weight below 1500 g/mol. Emulsions are thermodynamically unstable, and the phases of an emulsion will separate with time. By an emulsifier is meant a compound that stabilises the interface between the two phases of the oil-in-water emulsion and reduces the rate of phase separation.

In an embodiment the emulsifiers are selected from the group consisting monoglycerides, diglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, diacetylated tartaric acid esters of monoglycerides, lecithins, lysolecithins, succinic acid esters of mono- and/or diglycerides, lactic acid esters of mono- and/or diglycerides, lecithins, lysolecitins, proteins and sucrose esters of fatty acids, lecithin (e.g. soy lecithin, canola lecithin, sunflower lecithin, and/or safflower lecithin), lysolecithins, and combinations thereof.

The mixing step a) may be performed by different means. In an embodiment the first mixing step a) is done by milling to micronize the spice component. In the present context the term "micronize" relates to a process wherein the particles are processed to particle sizes below 100 micrometers (µm), such as in the range 0.1-50 µm, such as in the range 1-30 µm, such as in the range 1-20 µm. Similar the term "micronized" relates to particles with an average particle size below 100 micrometers (µm), such as in the range 0.1-50 µm, such as in the range 1-20 µm, or such as in the range 1-20 µm. Milling is preferably performed in a ball mill by wet milling or dry milling. In one embodiment of the invention, the first mixing step a) is done by milling to micronize the spice component. The milling may be for instance a roller milling of spice in oil or melted fat or impact milling of spice into oil.

The oil component of step a) may be selected from different sources. In one embodiment the oil component of step a) comprises oil selected from the group consisting of palm kernel oil, canola oil, soy bean oil, sunflower oil, safflower oil, cotton seed oil, palm oil, milk fat, corn oil, high oleic variants of oils such as high oleic soybean, high oleic canola, high oleic safflower, high oleic sunflower oil, and/or coconut oil. The oil is preferably present in the final product composition in an amount of at most about 50% (weight/weight), the amount of oil in the final product composition may e.g. be between 1% and 40% (weight/weight), such as in the range 5-40%, such as in the range 10-40, such as in the range 5-30%, or such as in the range between 10-30%. In the present context when oil is included in the weight/weight percentages the % relates to the non-water part but including oil (solid content + oils). The total amount of oil component comprising micronized spice therein in the aqueous composition may also vary. Thus, in yet a further embodiment the aqueous composition comprises at least 5% (w/w) of the oil component comprising micronized spice therein, such as in the range 5-50%, such as 5-40%, such as 5-30%, such as in the range 5-20%, or such as in the range 5-15%. In another embodiment the aqueous composition comprises at least 20% (w/w) of the oil component comprising micronized spice therein. It is to be understood that these weight % includes both the oil and the micronized spice therein.

In the context of the present invention, mentioned percentages are weight/weight percentages of dry solids (on a dry matter basis) unless otherwise stated.

The process of the invention also includes the addition of a creamer component, preferably in an aqueous form. By a creamer composition/ is meant a composition that is intended to be added to a food composition to impart specific characteristics such as colour (e.g. whitening effect), flavour, texture, mouthfeel and/or other desired characteristics. Thus the spice composition as provided by this invention can also be used as a creamer. The creamer component provided in step b) is in a liquid form, but the final creamer composition of the invention may be in a liquid form or in a powdered (dry) form. In the present context dried spice is to be understood as having a moisture content below 10%, preferably below 5% or more preferably below 3% water.

The creamer component may be any ingredient or combination of ingredients useful for inclusion in a aqueous composition. Thus, in an embodiment the aqueous component of step b) comprises a protein, a hydrocolloid, a buffering agent, and/or a sweetener.

The aqueous component preferably comprises protein in the range 0.5-15%, such as 1.5-10% such as 1.5-5% preferably between about 0.1-3% protein, such as between about 0.2-2% protein, more preferably between about 0.5% (weight/weight) and about 1.5% protein.

The protein may be any suitable milk protein or plant protein, such as casein, caseinate, and whey protein; vegetable protein, e.g. soy and/or pea protein; and/or combinations thereof.

The protein is preferably sodium caseinate. The protein in the composition may work as an emulsifier, provide texture, and/or provide whitening effect. Too low levels of protein may reduce the stability of the liquid creamer. At too high protein levels the viscosity of the product may be higher than desired and too high for liquid processing.

The aqueous component may comprise a hydrocolloid. Hydrocolloids may help to improve physical stability of the composition. Suitable hydrocolloids may e.g. be carrageenan, such as kappa-carragenan, iota-carragenan, and/or lambda-carragenan; starch, e.g. modified starch; cellulose, e.g. microcrystalline cellulose, methyl cellulose, or carboxy-methyl cellulose; agar-agar; gelatine; gellan (e.g., high acyl, low acyl); guar gum; gum Arabic; kojac; locust bean gum; pectin; sodium alginate; maltodextrin; tracaganth; xanthan; or a combination thereof.

The aqueous component of the present invention may further include a buffering agent. The buffering agent can prevent undesired creaming or precipitation of the creamer upon addition into a hot, acidic environment. The buffering agent can e.g. be monophosphates, diphosphates, sodium mono- and bicarbonates, potassium mono- and bicarbonates, or a combination thereof. Preferred buffers are salts such as potassium phosphate, dipotassium phosphate, potassium hydrophosphate, sodium bicarbonate, sodium citrate, sodium phosphate, disodium phosphate, sodium hydrophosphate, and sodium tripolyphosphate. The buffer may e.g. be present in an amount of about 0.1 to about 3% by weight of the creamer.

The aqueous component of the present invention may further include one or more additional ingredients such as flavors, sweeteners, colorants, antioxidants (e.g. lipid antioxidants), or a combination thereof. Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used. In one embodiment, a sweetener is present in the creamer composition of the invention at a concentration ranging from about 5-90% by weight of the total composition, such as in the range 20-90%, preferably such as 20-70%. In another embodiment, the sweetener concentration ranges from about 40% to about 60% by weight of the total composition. In a preferred embodiment the sweetener of step e) is glucose syrup.

In a preferred embodiment the aqueous component comprises sodium caseinate, dipotassium phosphate, sodium hexametaphosphate, trisodium citrate, sodium chloride and water. In yet an embodiment the aqueous component of step b) is a non-dairy creamer. When sodium caseinate is processed, it is so materially altered that both dairy scientists and government regulators no longer regard it as a true dairy substance. This is why sodium caseinate can be an ingredient in non-dairy products according to FDA's regulation.

Examples of typical aqueous compositions are presented in tables 1-3 below.

**Table 1: Non-dairy creamers**

| **Ingredients (in % by weight)** | **Non-dairy (NDC)** | | |
|---|---|---|---|
| | LOW FAT | REGULAR | HIGH FAT |
| Milk solids non-fat (SNF) | no | no | no |
| Casein / caseinate | 1.5 -3.0 | 1.5 -3.0 | 1.5 -3.0 |
| Lactose / sweet whey | no | 110 | no |
| Glucose syrup | 80-90 | 50-60 | 40-50 |
| Milk fat | no | no | no |
| Vegetable fat | 10-20 | 30-35 | 40-45 |
| Emulsifiers | yes | yes | yes |
| Buffer salts | yes | yes | yes |
| Flavours | optional | optional | optional |
| Colorants | optional | optional | optional |
| Flowing agents | optional | optional | optional |
| Moisture | 1-3 | 1-3 | 1-3 |

**Table 2: Filled dairy creamers**

| **Ingredients (in % by weight)** | **Filled dairy (FDC)** | | |
|---|---|---|---|
| | LOW FAT | REGULAR | HIGH FAT |
| Milk solids non-fat (SNF) | 70-90 | 20 - 40 | 20 - 40 |
| Casein / caseinate | optional | optional | optional |
| Lactose /sweet whey | 0-10 | 20 - 40 | 20 - 40 |
| Glucose syrup | optional | optional | optional |
| Milk fat | no | no | no |
| Vegetable fat | 0-10 | 25-30 | 35-40 |
| Emulsifiers | no | no | no |
| Buffer salts | yes | yes | yes |
| Flavours | optional | optional | optionai |
| Colorants | optional | optional | optional |
| Flowing agents | optional | optional | optional |
| Moisture | 1-3 | 1-3 | 1-3 |

**Table 3: Full dairy creamers**

| **Ingredients (in % by weight)** | **Full dairy** |
|---|---|
| Milk solids non-fat (SNF) | 30 - 40 |
| Casein / caseinate | optional |
| Lactose /sweet whey | 0 - 40 |
| Glucose syrup | no |
| Milk fat | 15 - 30 |
| Vegetable fat | No |
| Emulsifiers | no |
| Buffer salts | yes |
| Flavours | optional |
| Colorants | optional |
| Flowing agents | optional |
| Moisture | 1-3 |

The skilled person may produce other variants of creamers. Thus, the above creamer compositions are mere examples of aqueous compositions.

The process may also include a pasteurizing step. Thus, in yet another embodiment the pasteurizing step is performed at a minimum temperature of 81°C for at least 5 seconds. The spice composition as obtained after the pasteurizing step can be used for making RTD beverages. The process may also include a drying step. Thus, in a further embodiment the drying step is performed by spray drying, vacuum band drying, roller drying or freeze drying. The spice composition as obtained after the drying step can be used for making creamers for use in beverage industry for example as milk additive for coffee and tea beverage. The spice composition after dry mixing may be used to make beverage powders such a chocolate/malt beverages, coffee mixes, bakery and culinary products such as cream soups, creamy sauces for retail purposes. Such spice composition may also be used for preparation of capsules to be used in a beverage dispenser.

As previously mentioned the spice may also be in a dried form.

The amount of micronized spice may also be defined in relation to the amount of oil in which it is incorporated. Thus, in another embodiment the weight/weight ratio (or ratio by weight) between the amount of micronized spice incorporated in the oil to the amount of oil is in the range 0.01:1 - 2:1, such as 0.05:1 - 2:1, such as 0.1:1 - 2:1, such as 0.1:1 - 1:1, such as 0.4:1 -1:1, such as 0.6:1 - 1:1, such as 0.8:1 -1, or such as 1:1.

In the context of the present invention, the terms "ratio by weight" "(weight/weight)" or "weight/weight ratio" refers to the ratio between the weights of the mentioned compounds.

It is to be understood that the spice compositions of the invention may both be in a dry format (moisture content below 10%, preferably below 5%, and even more preferably below 3%) or in a liquid state.

It should be noted that embodiments and features described in the context of one of the aspects of the present invention also apply to the other aspects of the invention.

The invention will now be described in further details in the following non-limiting examples.

### Examples

### Example 1

Process for providing a Ready-To-Drink (RTD) beverage

### Methods

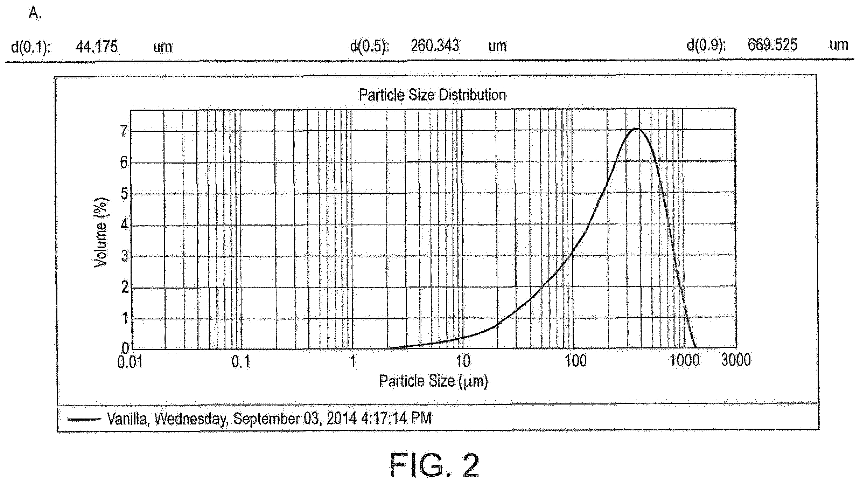

Milled vanilla pods (particle size distribution given in Fig. 2A) were mixed into palm kernel oil at T=60°C for 20 min until fully dispersed. This dispersion of vanilla in oil is then micronized in using a wet bead mill (Hosokawa Alpine Hydro-Mill 90 AHM, T=65°C, zirconium oxide bead 1.7/1.9 mm, 3000 RPM, TS33).

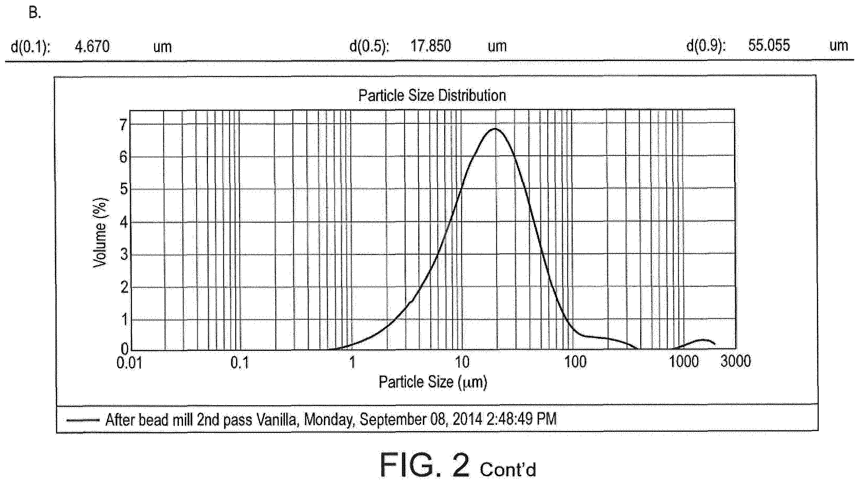

After two passages through the mill the size distribution of the micronized particles is characterized by a d_{90,3} of 55 µm, i.e 90% of the mass belongs to particles with a diameter smaller than 55 micrometers. The corresponding particle size distribution is given in Figure 2B.

In parallel skim milk (95%) and sugar (5%) were mixed and stirred in a vessel at 50°C. Both the oily and the aqueous preparation were then mixed and stirred at 50°C. The final mix was pre-heated (80°C), subjected to UHT treatment by direct steam injection (APV-HTST at 145°C during 5 sec), flash-cooled to 80°C and homogenized (APV-HTST).

The final liquid beverage contains 93.5% skim milk, 4% sugar, 2% fat and 0.5% micronized vanilla.

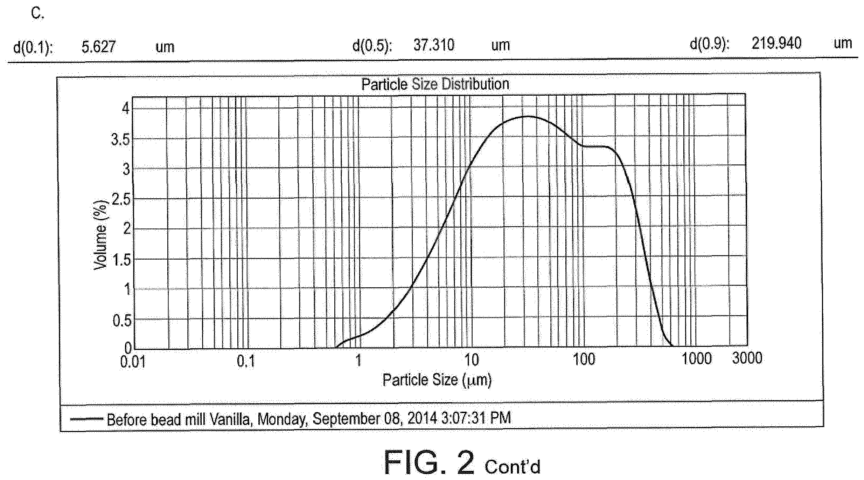

A reference RTD beverage at equal composition was prepared, where the vanilla was not added via the oil phase as described in the current invention, but mixed into the skim milk together with the sugar. The particle size distribution of the dry milled reference vanilla powder is shown in Figure 2C. It is characterized by a d_{90,3} of 220 µm.

### Sedimentation test

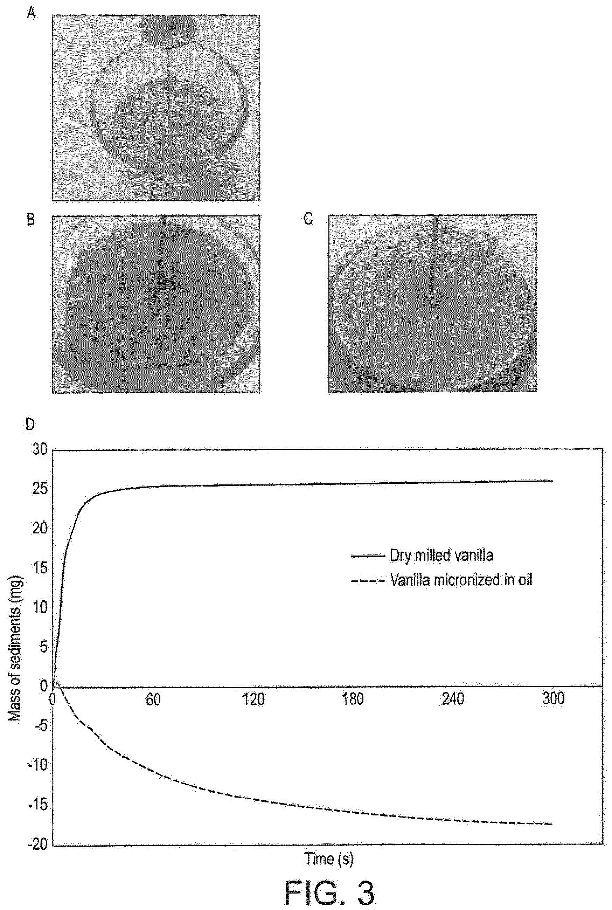

The beverage samples were poured into in a cup at T=25°C. The beverage was allowed a settling time of 5 minutes and the sedimentation test was done by measuring the mass of sediments in the cup on a submersed plate using a sedimentation balance: Mettler Toledo XP404S Excellence Plus with Density Determination Kit. Balance Link Software V 4.02. The cup with the immersed plate is shown in Fig. 3 A.

### Results

An impression of the sediments accumulated during 5 minutes on a plate submersed in the cup is shown on the picture in Fig. 3B for the current invention and in Fig. 3C for a reference RTD beverage with dry-milled vanilla pieces mixed into the preparation. Based on continuous and quantitative measurement of particle sedimentation in the cup with the help of the sedimentation balance, the stability of the dispersion of the micronized particles in the RTD beverage preparation can be evaluated. The result is presented in Fig. 3D. While a steep increase of the sedimented vanilla particle mass for the reference sample (dispersion of dry vanilla particles into the RTD beverage preparation) is observed, the product according to the current invention (i.e. vanilla micronized in oil) does not settle within 5 min time. The mass on the sedimentation balance even decreases slightly, as some light particles move upwards, driven by buoyancy as illustrated in Fig. 1. Very few sediments are found on the immersed plate for the micronized vanilla in oil sample.

### Example 2

### Process for providing a creamer

### Methods

Milled vanilla pods (particle size distribution given in Fig. 2A) were mixed with pre-heated palm kernel oil and micronized using a wet bead mill (Hosokawa Alpine Hydro-Mill 90 AHM, T=65°C, zirconium oxide bead 1.7/1.9 mm, 3000 RPM, TS33).

After two passages through the mill the size distribution of the micronized particles is characterized by a d_{90,3} of 55 µm, i.e 90% of the mass belongs to particles with a diameter smaller than 55 micrometers.

The oil containing micronized vanilla particles was then mixed with monoglyceride Dimodan™ and Panodan™ (Dupont). In parallel typical non-dairy creamer ingredients (sodium caseinate, dipotassium phosphate, sodium hexametaphosphate, trisodium citrate, and sodium chloride) were mixed in water and stirred in a vessel at 50°C.

These two mixes were then mixed and stirred at 50°C with the addition of glucose syrup.

The final mix was homogenized (APV-HTST) and pasteurized (APV-HTST at 85°C during 5 sec). The pasteurized mix was then spray-dried (NIRO SD-6.3-N) at 160°C.

In this example, 5% of the final creamer dry weight is represented by vanilla particles added via the oil phase. Vegetable oil represents 35% of the dry weight of the creamer preparation.

A reference creamer at equal composition was prepared, where the vanilla was not added via the oil phase as described in the current invention, but dry mixed into the spray-dried creamer preparation. The particle size distribution of the dry milled reference vanilla powder is shown in Figure 2C. It is characterized by a d_{90,3} of 220 µm.

### Sensory data

The sensory characteristics of the vanilla creamer composition were judged by sensory panellists. The creamer preparation according to the present invention was evaluated versus a reference sample at equal composition. For the reference sample 5% vanilla powder was added in a dry mixing step to a reference creamer preparation made with palm kernel oil (35%). It was found by the panel that the composition of the present invention exhibited a smooth and stable suspension with enhanced mouthfeel and thickness. Sedimentation was absent during consumption as described above. Detailed observations are represented in Table 4.

**Table 4: Sensory evaluation results**

| | **Dry mix of vanilla powder** | **Micronized in oil** |
|---|---|---|
| **Appearance** | Brown with particles | Brownish |
| **Flavor** | Woody | Vanilla |
| | Vanilla | Sweet |
| | Almond | Peanut |
| | English tea | Bitter |
| | Sweet | Cream |
| | Nutty | Cereal |
| **Texture** | Watery | Thicker |
| | Astringent | Oily |
| | Gritty | |

### Protocol

- Samples were coded with a 3-digit number, presented in the same order by all the participants. The samples were blinded for the participants, except for the Sensory Analyst and the Experimental Kitchen team leading the session.
- Participants were provided with a paper questionnaire and asked to describe each sample as exhaustively as possible using descriptive non-hedonic words.
- Participants tasted the samples individually and in the same order.
- The samples were tested by pairs.
- After each pair of samples the participants shared their comments with the group and discussed on the samples one by one.
- There was a pause in between each tasted sample. During that time participants had to rinse their mouth with Vittel water.
- At the end of the session all the comments were summarized and discussed.

### Confocal microscopy

Samples of the RTD final beverage preparation were analysed under a confocal microscope (LSM710, Zeiss). Samples have been stained with:
- Nile red (Sigma # Sigma N3013) for fat staining at 488 nm excitation wavelength
- Fast green FCF (Serva electrophoresis # SVA2129502) for protein staining at 633 nm excitation wavelength

Microscopy pictures of reconstituted liquid beverages are presented in Figure 4. Fig. 4A shows a reference sample (dispersion of dry micronized vanilla particles added to the creamer preparation), whereas Fig. 4B shows a creamer sample containing vanilla particles micronized in oil.

### Results

The confocal microscopy pictures presented on Figure 4 show an intense signal next to the oil droplets surface when the particles have been milled in oil whereas no specific signal is observed in the case of the reference sample. The presence of the particles next to the oil/water interface contributes to a better stabilization of the beverages: the attachment, presence and interfacial adsorption of the particles at the surface of the oil droplet makes the entity "micronized spice particle covered in oil" heavier (i.e. increase in density) than the single oil droplet and lighter than the particle itself (per unit volume). In these conditions, oil covered micronized vanilla particle sedimentation is prevented due to density match.

### Example 3

### Process for providing a beverage powder

### Methods

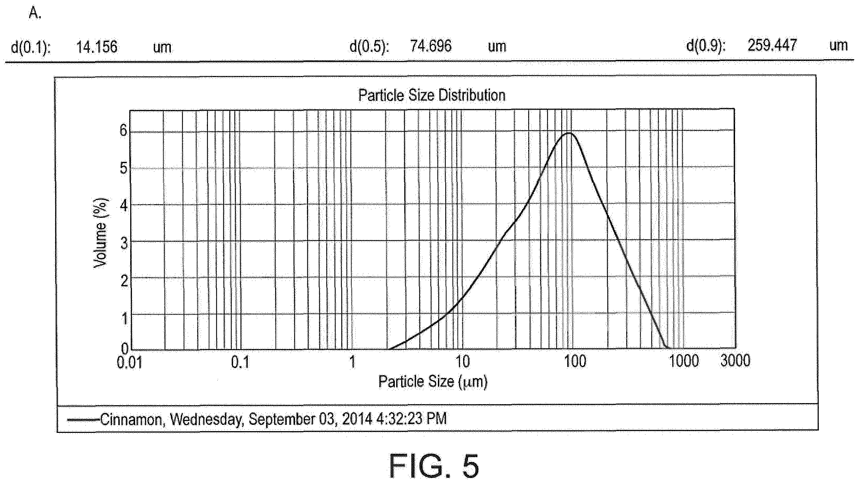

Cinnamon powder (particle size distribution given in Fig. 5A) was mixed into palm kernel oil at T=65°C for 20 min until fully dispersed. This dispersion is then micronized using a wet bead mill (Hosokawa Alpine Hydro-Mill 90 AHM, T=65°C, zirconium oxide bead 1.7/1.9 mm, 3000 RPM, TS 33).

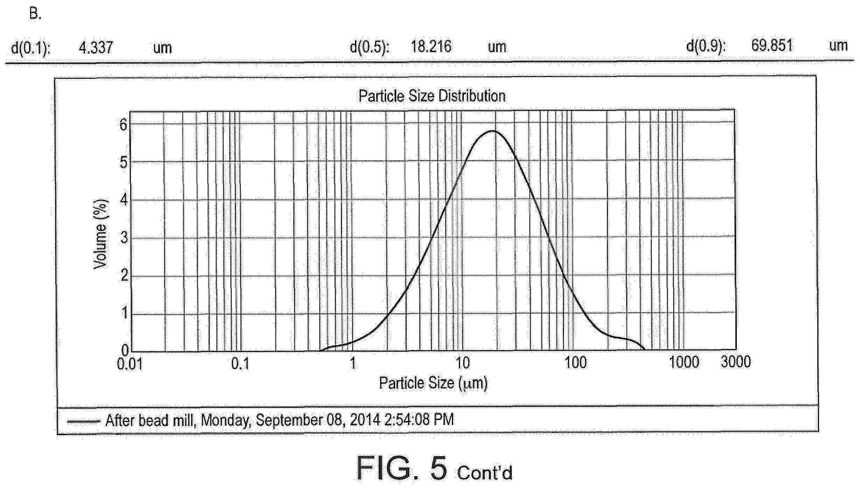

After one pass through the mill the size distribution of the micronized particles is characterized by a d_{90,3} of 70 µm, i.e 90% of the mass belongs to particles with a diameter smaller than 70 micrometers. The corresponding particle size distribution is given in Figure 5B.

The oil containing micronized cinnamon particles was then mixed with monoglyceride Dimodan™ and Panodan™ (Dupont). In parallel typical non-dairy creamer ingredients (sodium caseinate, dipotassium phosphate, sodium hexametaphosphate, trisodium citrate, and sodium chloride) were mixed in water and stirred in a vessel at 50°C.

These two mixes were then mixed and stirred at 50°C with the addition of glucose syrup.

The final mix was homogenized (APV-HTST) and pasteurized (APV-HTST at 85°C during 5 sec). The pasteurized mix was then spray-dried (NIRO SD-6.3-N) at 160°C.

In this example, 5% of the final creamer dry weight is represented by cinnamon particles added via the oil phase.

The obtained creamer powder is used as an ingredient in a powdered beverage preparation.

For this purpose, the creamer powder containing micronized cinnamon is dry mixed with sugar and soluble coffee powder. A typical beverage powder composition comprises 35% creamer with cinnamon, 12% soluble coffee and 53% sugar. Cinnamon represents 5% of the creamer powder mass or (i.e. 1.75% of the final beverage powder mass). The obtained powder is filled in sachets and provides an instant coffee beverage upon reconstitution with hot water. In another use the described powdered beverage preparation is filled into capsules and provides a coffee beverage upon reconstitution with the help of a beverage system such as Nescafé Dolce Gusto.

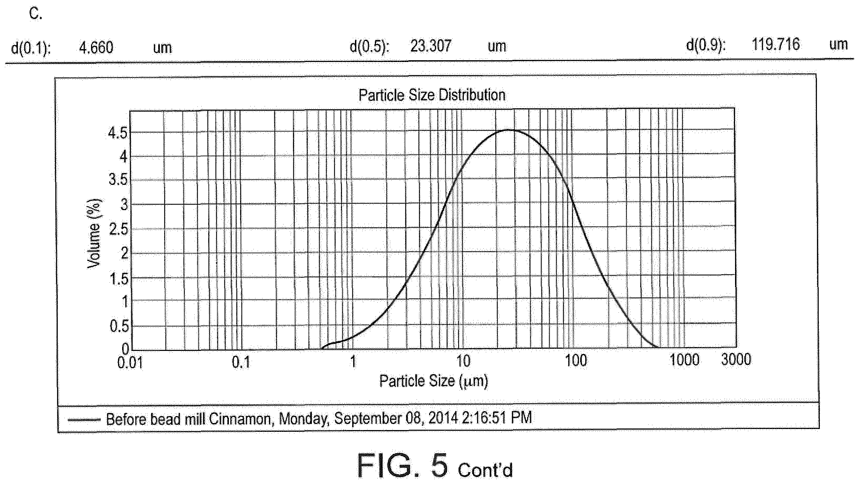

A reference beverage powder at equal composition was prepared, where the cinnamon was not added via the oil phase as described in the current invention, but dry mixed into the beverage powder the sugar. The particle size distribution of the dry milled reference vanilla powder is shown in Figure 5C. It is characterized by a d_{90,3} of 120 µm.

### Dissolution kinetics analysis

The term "dissolution" refers to the reconstitution of the beverage powder in a liquid. The term t90 refers to the time taken for 90% weight of the powder to be dissolved in a liquid.

This time t90 can measured accurately by means of electrical conductivity, i.e using the device Metrohm module 856. A water bath is kept at constant temperature. The conductivity probe is introduced into the liquid and kept, until a steady state electrical conductivity is measured. Adding powder into the liquid starts the measurement. Stirring can be applied with the help of a magnetic stirrer. Ions released upon dissolution of the tablet increase the electrical conductivity of the medium. By dissolving the tablet completely, a plateau of the electrical conductivity is reached. The time t90 is defined as the point of time, when 90% of the total conductivity transition from the initial to the final steady state value is reached. For more details consult the Metrohm user manual: http://partners.metrohm.com/GetDocument?action=get _dms_document&docid=1432097

### Results

A glass beaker containing 400 ml water was kept at 80°C. The beaker was equipped with an electrical conductivity probe and a magnetic stirrer turning at 250 RPM. A portion of 7 g of the beverage powder according to Example 3 was dosed into the beaker and the conductivity measurement was started. The evolution of the electrical conductivity, which is proportional to the amount of solid dissolved, was monitored for 600s. Typically a plateau is formed after 50-100 s, indicating complete dissolution.

For comparison, a reference sample was produced containing the same amount of cinnamon powder and possessing the same overall fat content, where the cinnamon is incorporated as dry mix into the beverage powder composition. The same dissolution test was performed using the reference powder.

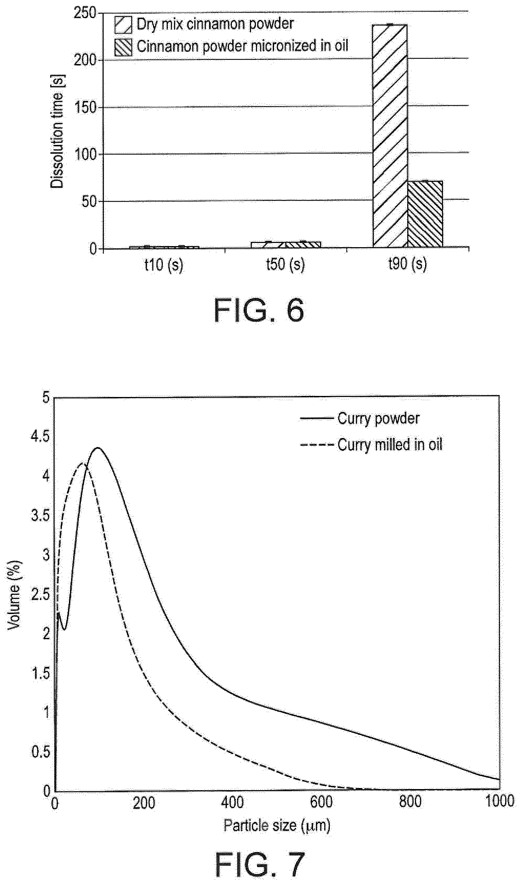

The time points where 10%, 50% and 90% respectively of the conductivity change from the start to the steady state value were reached are represented in Figure 6 for both the reference sample and the beverage powder containing cinnamon micronized in oil.

It can be seen from the results that the incorporation of calcium cinnamon micronized in oil into the creamer matrix brings a significant benefit in terms of dissolution kinetics over a traditional beverage powder preparation containing dry mixed calcium carbonate powder at equal calcium carbonate and fat content.

### Example 4 (not according to the claimed invention)

### Process for providing a creamy soup

### Methods

Milled curry powder (particle size distribution given in Fig. 7) was mixed with pre-heated palm kernel oil and micronized using a wet bead mill (Hosokawa Alpine Hydro-Mill 90 AHM, T=65°C, zirconium oxide bead 1.7/1.9 mm, 3000 RPM, TS30).

After one passage through the mill the size distribution of the micronized particles is characterized by a d_{90,3} of 134 µm, i.e 90% of the mass belongs to particles with a diameter smaller than 134 micrometers.

The oil containing micronized curry particles were then mixed with monoglyceride Dimodan™ and Panodan™ (Dupont). In parallel typical non-dairy creamer ingredients (sodium caseinate, dipotassium phosphate, sodium hexametaphosphate, trisodium citrate, and sodium chloride) were mixed in water and stirred in a vessel at 50°C.

These two mixes were then mixed and stirred at 50°C with the addition of glucose syrup. The final mix was homogenized (APV-HTST) and pasteurized (APV-HTST at 85°C during 5 sec). The pasteurized mix was then spray-dried (NIRO SD-6.3-N) at 160°C.

In this example, 10% of the final creamer dry weight is represented by curry particles added via the oil phase. Vegetable oil represents 35% of the dry weight of the creamer preparation.

A reference creamer at equal composition was prepared, where the curry was not added via the oil phase as described in the current invention, but dry mixed into the spray-dried creamer preparation. The particle size distribution of the dry milled reference curry powder is shown in Figure 7. It is characterized by a d_{90,3} of 241 µm.

The spiced creamer powder is then in a next step dry mixed with other ingredients as indicated in Table 2 in order to obtain a powdered creamy soup. At otherwise identical composition, a reference creamy soup containing 1% dry milled curry powder is prepared and compared to the product of the current invention: a creamy soup containing 1% curry micronized in oil and added via the spiced creamer powder to the soup mix.

| | Reference creamy soup (%) | Creamy soup with curry micronized in oil (%) |
|---|---|---|
| Flour / Starch | 65 | 65 |
| Salt | 12 | 12 |
| Sugar | 1.5 | 1.5 |
| Yeast Extract | 0.5 | 0.5 |
| Creamer | 9 | 0 |
| Creamer with curry | 0 | 10 |
| Taste enhancers | 2.5 | 2.5 |
| Flavoring Ingredients & Spices | 2 | 2 |
| Curry powder | 1 | 0 |
| Fat/Oil | 6.5 | 6.5 |

The sensory characteristics of both the reconstituted reference soup and the soup according to the current invention containing curry micronized in oil were judged by sensory panellists. It was found that the composition of the present invention exhibited a more intensive colour and stronger curry flavor.

### Example 5

### Process for providing a creamy sauce

The creamer containing curry micronized in oil from Example 4 is dry mixed with other ingredients as indicated in Table 3 in order to obtain a powdered creamy sauce. At otherwise identical composition, a reference creamy sauce containing 0.5% dry milled curry powder is prepared and compared to the product of the current invention: a creamy soup containing 0.5% curry micronized in oil and added via the spiced creamer powder to the sauce mix.

| | Reference creamy sauce (%) | Creamy Sauce (Béchamel Type) % |
|---|---|---|
| Flour / Starch | 54 | 54 |
| Salt | 9 | 9 |
| Sugar | 3 | 3 |
| Yeast Extract | 2 | 2 |
| Creamer | 5 | 0 |
| Creamer with curry | 0 | 5.5 |
| Curry powder | 0.5 | 0 |
| Taste enhancers | 10 | 10 |
| Flavoring Ingredients & Spices | 1 | 1 |
| Skim milk powder | 16 | 16 |

The sensory characteristics of both the reconstituted reference sauce and the sauce according to the current invention containing curry micronized in oil were judged by sensory panellists. It was found that the composition of the present invention exhibited a more intensive colour and stronger curry flavor.

## Claims

1. A process for providing a spice composition, wherein the spice is not coffee, the process comprising a first mixing step to obtain a first composition and a second mixing step to obtain a second composition;
wherein
a) mixing in a first mixing step an oil component with spices and grinding the spice in oil thereby providing a first composition comprising micronized spices with an average particle size below 100 micrometers (µm) incorporated in the oil component;
b) providing an aqueous component comprising milk proteins, plant proteins or combinations thereof thereby providing a second composition,
c) mixing in a second mixing step the first composition with the second composition and
d) homogenising the composition thereby providing an oil-in-water emulsion.

2. The process of claim 1 wherein the second composition is a milk protein and wherein the milk protein comprises sodium caseinate.

3. The process according to claim 1, wherein the process comprises further steps of:
- adding a bulking and/or sweetener agent(s) to the oil-in-water emulsion; and
- pasteurizing or commercially sterilizing the oil-in-water emulsion.

4. The process according to claim 3, wherein the bulking agent comprises maltodextrin, a sugar or combination of carbohydrates and/or fibers.

5. The process according to any one of the claims 1 to 4, wherein the process comprises further steps of
- drying the oil-in-water emulsion; and
- providing a spice composition.

6. The process according to any one of the claims 1 to 4, wherein the process comprises further steps of
- HTST or UHT using either direct or indirect process; and
- Filled on a clean fill, ultra clean fill (ESL) or aseptic filler.

7. The process according to any one of the claims 1 to 6, wherein one or more emulsifiers are added
- to the first composition in step a); and/or
- to the aqueous component in step b); and/or
- during the mixing step c); and/or
- during the homogenisation step d).

8. The process according to any one of the claims 1 to 7, wherein the first mixing step a) is done by milling to micronize the spice component.

9. The process according to any of the preceding claims, wherein the aqueous component of step b) comprises skim milk solids, caseinate, e.g. sodium caseinate, and/or whey protein.

10. The process according to any of the preceding claims, wherein the weight/weight ratio between the amount of spice incorporated in the oil and the amount of oil is in the range 0.01:1 - 2:1, such as 0.05:1 - 2:1, such as 0.1:1 - 2:1, such as 0.1:1 - 1:1, such as 0.4:1 - 1:1, such as 0.6:1 - 1:1, such as 0.8:1 - 1, or such as 1:1.

11. The process according to claim 10, wherein the composition according to mixing step c) comprises at least 5% (w/w) of the oil component comprising micronized spice therein, wherein the % relates to the non-water part but including oil.

12. The process according to any of claims 10 or 11, wherein the composition according to mixing step c) comprises:
- 5-50% (w/w) of the oil component comprising micronized spice incorporated therein, wherein the % relates to the non-water part but including oil and wherein the micronized spice constitutes 2.5-70% of the total weight of the oil component comprising micronized spice incorporated therein;
- 1-50% (w/w) of dry solids of one or more protein components, e.g. including sodium caseinate; and
- 5-70% (w/w) of dry solids of a sugar source.

## Patentansprüche

1. Verfahren zum Bereitstellen einer Gewürzzusammensetzung, wobei es sich bei dem Gewürz nicht um Kaffee handelt, wobei das Verfahren einen ersten Mischschritt zum Erhalten einer ersten Zusammensetzung und einen zweiten Mischschritt zum Erhalten einer zweiten Zusammensetzung umfasst;
wobei
a) in einem ersten Mischschritt ein Ölbestandteil mit Gewürzen gemischt und das Gewürz in Öl gemahlen wird, wodurch eine erste Zusammensetzung bereitgestellt wird, die mikronisierte Gewürze mit einer durchschnittlichen Teilchengröße unter 100 Mikrometer (µm) umfasst, die in den Ölbestandteil eingearbeitet sind;
b) ein wässriger Bestandteil bereitgestellt wird, der Milchproteine, Pflanzenproteine oder Kombinationen davon umfasst, wodurch eine zweite Zusammensetzung bereitgestellt wird,
c) in einem zweiten Mischschritt die erste Zusammensetzung mit der zweiten Zusammensetzung gemischt wird und
d) die Zusammensetzung homogenisiert wird, wodurch eine Öl-in-Wasser-Emulsion bereitgestellt wird.

2. Verfahren nach Anspruch 1, wobei es sich bei der zweiten Zusammensetzung um ein Milchprotein handelt und wobei das Milchprotein Natriumcaseinat umfasst.

3. Verfahren nach Anspruch 1, wobei das Verfahren ferner die folgenden Schritte umfasst:
- Zugeben eines Füllstoffs und/oder eines oder mehrerer Süßungsmittel zu der Öl-in-Wasser-Emulsion; und
- Pasteurisieren oder handelsübliches Sterilisieren der Öl-in-Wasser-Emulsion.

4. Verfahren nach Anspruch 3, wobei der Füllstoff Maltodextrin, einen Zucker oder eine Kombination von Kohlenhydraten und/oder Ballaststoffen umfasst.

5. Verfahren nach einem der Ansprüche 1 bis 4, wobei das Verfahren die folgenden weiteren Schritte umfasst:
- Trocknen der Öl-in-Wasser-Emulsion; und
- Bereitstellen einer Gewürzzusammensetzung.

6. Verfahren nach einem der Ansprüche 1 bis 4, wobei das Verfahren die folgenden weiteren Schritte umfasst:
- Kurzzeit-Hochtemperaturpasteurisierung (HTST) oder Ultrahocherhitzung (UHT) unter Verwendung entweder eines direkten oder eines indirekten Prozesses; und
- Füllen auf einem reinen Füller, einem ultra-reinen Füller (ESL) oder einem aseptischen Füller.

7. Verfahren nach einem der Ansprüche 1 bis 6, wobei ein oder mehrere Emulgatoren zugegeben werden
- zu der ersten Zusammensetzung in Schritt a); und/oder
- zu dem wässrigen Bestandteil in Schritt b); und/oder
- während des Mischschritts c); und/oder
- während des Homogenisierungsschritts d).

8. Verfahren nach einem der Ansprüche 1 bis 7, wobei der erste Mischschritt a) durch Mahlen erfolgt, um den Gewürzbestandteil zu mikronisieren.

9. Verfahren nach einem der vorstehenden Ansprüche, wobei der wässrige Bestandteil aus Schritt b) Magermilchfeststoffe, Caseinat, z. B. Natriumcaseinat, und/oder Molkeprotein umfasst.

10. Verfahren nach einem der vorstehenden Ansprüche, wobei das Gewicht/Gewicht-Verhältnis zwischen der Menge an in das Öl eingearbeitetem Gewürz und der Menge an Öl im Bereich von 0,01:1 bis 2:1, wie 0,05:1 bis 2:1, wie 0,1:1 bis 2:1, wie 0,1:1 bis 1:1, wie 0,4:1 bis 1:1, wie 0,6:1 bis 1:1, wie 0,8:1 bis 1 oder wie 1:1, liegt.

11. Verfahren nach Anspruch 10, wobei die Zusammensetzung gemäß Mischschritt c) mindestens 5 Gew.-% des Ölbestandteils umfasst, der mikronisierte Gewürze darin umfasst, wobei sich die %-Angabe auf den Nichtwasserteil, aber einschließlich Öl, bezieht.

12. Verfahren nach einem der Ansprüche 10 oder 11, wobei die Zusammensetzung gemäß Mischschritt c) Folgendes umfasst:
- 5-50 Gew.-% den Ölbestandteil, der darin eingearbeitetes mikronisiertes Gewürz umfasst, wobei sich die %-Angabe auf den Nichtwasserteil, aber einschließlich Öl, bezieht und wobei das mikronisierte Gewürz 2,5-70 Gew.-% des Gesamtgewichts des Ölbestandteils, der darin eingearbeitetes mikronisiertes Gewürz umfasst, ausmacht;
- 1 bis 50 Gew.-% trockene Feststoffe von einem oder mehreren Proteinbestandteilen, z.B. einschließlich Natriumcaseinat; und
- 5 bis 70 Gew.-% trockene Feststoffe von einer Zuckerquelle.

## Revendications

1. Procédé de fourniture d'une composition d'épice, dans lequel l'épice n'est pas du café, le procédé comprenant une première étape de mélange pour obtenir une première composition et une deuxième étape de mélange pour obtenir une deuxième composition ;
dans lequel
a) on mélange dans une première étape de mélange un composant huileux avec des épices et on broie l'épice dans l'huile ce qui fournit une première composition comprenant des épices micronisées avec une taille moyenne de particules inférieure à 100 micromètres (µm) incorporées dans le composant huileux ;
b) on fournit un composant aqueux comprenant des protéines de lait, des protéines végétales ou des combinaisons de celle-ci ce qui fournit une deuxième composition,
c) on mélange dans une deuxième étape de mélange la première composition avec la deuxième composition et
d) on homogénéise la composition ce qui fournit une émulsion huile-dans-eau.

2. Procédé selon la revendication 1, dans lequel la deuxième composition est une protéine de lait et dans lequel la protéine de lait comprend du caséinate de sodium.

3. Procédé selon la revendication 1, dans lequel le procédé comprend les étapes supplémentaires consistant à :
- ajouter un ou des agent(s) gonflant(s) et/ou édulcorant(s) à l'émulsion huile-dans-eau ; et
- pasteuriser ou stériliser commercialement l'émulsion huile-dans-eau.

4. Procédé selon la revendication 3, dans lequel l'agent de gonflement comprend de la maltodextrine, un sucre ou une combinaison de glucides et/ou de fibres.

5. Procédé selon l'une quelconque des revendications 1 à 4, dans lequel le procédé comprend les étapes supplémentaires de
- séchage de l'émulsion huile-dans-eau ; et
- fourniture d'une composition d'épice.

6. Procédé selon l'une quelconque des revendications 1 à 4, dans lequel le procédé comprend les étapes supplémentaires de
- traitement HTST ou UHT en utilisant un procédé soit direct soit indirect ; et
- remplissage sur un remplissage propre, remplissage ultra propre (ESL) ou remplissage aseptique.

7. Procédé selon l'une quelconque des revendications 1 à 6, dans lequel un ou plusieurs émulsifiants sont ajoutés
- à la première composition à l'étape a) ; et/ou
- au composant aqueux à l'étape b) ; et/ou
- durant l'étape de mélange c) ; et/ou
- durant l'étape d'homogénéisation d).

8. Procédé selon l'une quelconque des revendications 1 à 7, dans lequel la première étape de mélange a) est faite par mouture pour microniser le composant d'épice.

9. Procédé selon l'une quelconque des revendications précédentes, dans lequel le composant aqueux de l'étape b) comprend des solides de lait écrémé, du caséinate, par exemple, du caséinate de sodium, et/ou de la protéine de lactosérum.

10. Procédé selon l'une quelconque des revendications précédentes, dans laquelle le rapport pondéral entre la quantité d'épice incorporée dans l'huile et la quantité d'huile est dans la plage 0,01:1 à 2:1, telle que 0,05:1 à 2:1, telle que 0,1:1 à 2:1, telle que 0,1:1 à 1:1, telle que 0,4:1 à 1:1, telle que 0,6:1 à 1:1, telle que 0,8:1 à 1, ou telle que 1:1.

11. Procédé selon la revendication 10, dans lequel la composition selon l'étape de mélange c) comprend au moins 5 % (en poids) du composant huileux comprenant une épice micronisée en son sein, dans lequel le % concerne la partie non-eau mais incluant l'huile.

12. Procédé selon l'une quelconque des revendications 10 ou 11, dans lequel la composition selon l'étape de mélange c) comprend :
- 5 à 50 % (en poids) du composant huileux comprenant une épice micronisée incorporée en son sein, dans lequel le % concerne la partie non-eau mais incluant l'huile et dans lequel l'épice micronisée constitue 2,5 à 70 % du poids total du composant huileux comprenant l'épice micronisée incorporée en son sein ;
- 1 à 50 % (en poids) de solide sec d'un ou plusieurs composants protéinés, par exemple incluant du caséinate de sodium ; et
- 5 à 70 % (en poids) de solide sec d'une source de sucre.
